# EUROPEAN PATENT SPECIFICATION

(11) **EP 2 206 436 B1**
(45) Date of publication and mention of the grant of the patent: **30.11.2011**
(21) Application number: 09174752.7
(22) Date of filing: 02.11.2009
(51) Int. Cl.: A23C 19/09, A23C 19/16

(54) **Method for coating a cheese and coated cheese having improved slicing properties**
Verfahren zur Beschichtung eines Käses und beschichteter Käse mit verbesserten Schneide-Eigenschaften
Procédé de revêtement de fromage et fromage revêtu doté de propriétés de découpe améliorées

(30) Priority: 23.12.2008 EP 08172715
(43) Date of publication of application: 14.07.2010
(73) Proprietor: CSK Food Enrichment B.V., 8938 AS Leeuwarden (NL)
(72) Inventor: Koopmans, Wieger Jan, 8911 ET LEEUWARDEN (NL); Delnoye, Didier André Pierre, 9721 RW Groningen (NL); Meijer, Willem Cornelis, 6712 HA Ede (NL); Hijkema, Tette, 8831 XX Winsum (NL)
(74) Representative: Swinkels, Bart Willem

(56) References cited:
- EP-A1- 1 537 785
- EP-A1- 1 917 862
- EP-A2- 1 932 431
- WO-A1-2008/141721
- FR-A- 1 453 977
- REDING FP, FAUCHER JA, WHITMAN RD: "Glass Transitions in Ethylene Copolymers and Vinyl Homopolymers and Copolymers" JOURNAL OF POLYMER SCIENCE, vol. 57, 1962, pages 483-498, XP002538312 DOI: 10.1002/pol.1962.1205716538
- ARSAC A ET AL: "Determination of Primary Relaxation Temperatures and Melting Points of Ethylene Vinyl Acetate Copolymers" JOURNAL OF THERMAL ANALYSIS AND CALORIMETRY, KLUWER ACADEMIC PUBLISHERS, DO, vol. 61, no. 3, 1 September 2000 (2000-09-01), pages 681-685, XP019253435 ISSN: 1572-8943

## Description

### Field of the invention

The present invention is in the field of cheese coatings. A method for coating a cheese is provided yielding cheese having improved slicing properties.

### Background of the invention

The use of water-borne compositions comprising suitable polymers for coating cheese, in particular semi-hard and hard cheese, is known. The treatment of a cheese with coating compositions and subsequent drying thereof generates a protective film which *inter alia* prevents mould formation on the cheese and counteracts excessively rapid drying of the cheese during ripening. Typically, cheese, in particular semi-hard and hard cheese, receives several treatments during ripening with the water-borne coating composition, usually with intermittent drying, until the cheese has reached the desired degree of ripening. After the last layer of the water-borne coating composition is applied and has dried, a paraffin-based wax finish is applied, optionally from a melt, onto the cheese in order to prepare the cheese for long-time storage and/or transportation without further ripening taking place and without further water evaporating from the cheese and/or further moulding taking place.

It is common practise in the production of natural ripened cheese to ripen or mature cheese at typical storage room conditions of temperatures between 10 and 15°C, preferably 12 and 15°C, and a relative humidity between 80 and 90%. After reaching the desired degree of ripening the coated cheeses (which may optionally have received a finish with a layer of the paraffin-based wax) is usually stored at lower temperatures, preferably between 3 and 8°C, in order to retard or stop the ripening process and help maintaining a hygienic condition of the cheese before cutting into pieces or slicing. During cutting or slicing, it is important that the dried coating does not detach from the cheese, breaks into pieces or cracks. It is also important and preferred that the cheese itself does not deform, breaks or cracks under the cutting or slicing forces.

The water-borne coating composition used for coating cheese is usually based on emulsion polymers comprising vinyl acetate. The Mowilith-Handbuch [Mowilith manual] from Hoechst AG (4th Edition, 1969, chapter 6.8, pp. 201 ff) already discloses the use of the poly(vinyl acetate) emulsion Mowilith® D which has a solids content of approximately 50% (w/w). However, the film coating formed from this emulsion is excessively brittle and, as a consequence, this emulsion is in practice of little use. Nonetheless, external plasticizers, e.g. dibutyl phthalate, may be added to improve the properties of the film coating, although such external plasticizers may be problematic, for example under food regulations.

Nowadays, plasticizer-free emulsions of poly(vinyl ester) copolymers, in particular plasticizer-free emulsions of poly(vinyl acetate), particularly of poly(vinyl acetate-*co-*dibutyl maleate), are widely used for coating cheese. The Mowilith-Handbuch [Mowilith manual] from Hoechst AG (4th edition, 1969, chapter 6.8, pp. 201 ff.) discloses a plasticizer-free poly(vinyl acetate-*co*-dibutyl maleate) emulsion for use as a cheese coating, i.e. Mowilith® DM2 KL, having a solids content of approximately 45% (w/w). Herein, the "soft" monomer dibutyl maleate acts as an internal plasticizer for the "hard" monomer vinyl acetate. Emulsions of copolymers based on vinyl esters (in particular vinyl acetate) and maleates, fumarates, acrylates or alpha-olefins, and their use for coating a cheese, are for example disclosed in EP 1458774, EP 1642929 and EP 1469017. Other polymer emulsions are based on (meth)acrylic homo- and copolymers, cf. for example EP1609367.

EP1537785 describes the use of compositions for the coating of cheese which comprises a water-borne polymer dispersion comprising (a) a copolymer comprising a vinylic ester of a saturated hydrocarbon, at least one of a maleic or fumaric ester, and a stabilising monomer, (b) a protective colloid, and (c) a nonionic emulsifier, said composition having a water vapour permeability ranging from 1-140 g/m².24h. According to EP1537785, advantages of the compositions include higher efficiency of the cheese ripening process by reducing evaporative water loss and/or the possibility to store cheese under conditions at lower relative humidity (i.e. having less risk of microbial growth on the exterior of the cheese) whilst keeping the moisture loss to an acceptable value. EP1537785 also claims a cheese provided with such a coating composition.

### Summary of the invention

It has been found that the properties of state-of-the-art cheese coating compositions comprising plasticizer-free emulsions arc still amenable to improvement. In particular, it has been found that the cutting or slicing behaviour of cheese coated with a composition based on plasticizer-free emulsions of poly(vinyl ester) copolymers is still associated with a number of drawbacks, especially when said cheese is (industrially) cut or sliced at a temperature of approx. 13 °C or lower and even more in particular when said cheese is cut or sliced at a temperature of approx. 8 °C or lower, wherein the temperature especially pertains to the surface temperature of the cheese, which may be suitably established using for example a (non-contact) IR thermometer or a contact temperature sensor. These drawbacks are in particular associated with the detachment of pieces of dried coating material from the cheese during cutting or slicing, the so-called grit formation, which may be deposited on the freshly cut cheese slice or piece.

The present inventors found that these drawbacks could be solved by applying a coating onto cheese that comprises a mixture of polymers with different glass transition temperatures (Tg). With such a coating it was found that grit formation when cutting cheese was much reduced or even virtually absent.

The present invention therefore broadly relates to a method for coating a cheese, wherein a water-borne coating composition is applied to a surface of the cheese, said coating composition comprising 90-40 parts by weight of a polymer A and 10-60 parts by weight of a polymer B, wherein polymer A and polymer B are each selected from the group consisting of a polyvinyl ester and a poly(meth)acrylate, wherein polymer A has a glass transition temperature T_{g}(A) of 10-27 °C and polymer B has a glass transition temperature T_{g}(B) of less than 8 °C. Preferably, polymer A is a polyvinyl ester. Even more preferably, polymers A and B are polyvinyl esters.

Herein, it is especially preferred that the glass transition temperature of polymer B is less than 8 °C or even less than 5 °C. Accordingly, cutting or slicing behaviour can be significantly improved even if the coated cheese obtained has a temperature at its surface of between 0 and 12 °C, more preferably of between 2 and 10 °C, most preferably of between 3 and 8 °C during cutting or slicing.

The invention especially relates to an embodiment of the method for coating a cheese, wherein the water-borne coating composition is applied to the surface of the cheese, said coating composition comprising 90-40 parts by weight of the polymer A and 10-60 parts by weight of the polymer B. Within these indicated ranges, an optimal balance can be provided regarding grit formation during cutting and tackiness of a dried coating formed by drying of said composition. As demonstrated in the Examples, this advantageous balance of properties may be obtained even if polymer B would provide too much (i.e. unacceptable) tackiness *per se.*

The invention also provides a water-borne cheese coating composition comprising 90-20, especially 90-40 parts by weight of a polymer A and 10-80, especially 10-60 parts by weight of a polymer B, wherein polymer A and polymer B are each selected from the group consisting of a polyvinyl ester and a poly(meth)acrylate, wherein polymer A has a glass transition temperature Tg(A) of 12-27 °C and wherein polymer B has a glass transition temperature T_{g}(B) of less than 12 °C, more preferably of less than 8 °C. Alternatively, and even more preferably, polymer A herein has a glass transition temperature T_{g}(A) of 10-27 °C and polymer B herein preferably has a glass transition temperature T_{g}(B) of less than 8 °C. Preferably, polymer A is a polyvinyl ester. Even more preferably, polymers A and B are polyvinyl esters.

The present invention further relates to a use of the present polymer B according to the invention as a grit-reducing additive in cheese coating compositions, especially as grit-reducing additive for cutting or slicing a cheese having a temperature at its surface of between 0 and 12 °C, more preferably of between 2 and 10 °C, most preferably of between 3 and 8 °C during cutting or slicing. The invention also provides a cheese obtainable by the method for coating a cheese.

### Detailed description of the invention

### Definitions

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

A polyvinyl ester is a polymer obtainable by polymerising a monomer or a monomer mixture comprising a vinyl ester monomer. The vinyl ester monomer is preferably a vinylic ester of an aliphatic saturated monocarboxylic acid having a chain length of C₁-C₁₈, which is most preferably vinyl acetate. A preferred polyvinyl ester is a polymer comprising vinyl acetate and dibutylmaleate, or a polymer comprising vinyl acetate and ethylene. A poly(meth)acrylate is a polymer obtainable by polymerising a monomer or a monomer mixture comprising a (meth)acrylate monomer. The (meth)acrylate monomer is preferably selected as a (meth)acrylic ester of an alkanol having a chain length of C₁-C₁₈

The expression "copolymer" relates to a polymer obtainable by polymerising two or more different monomers.

The chain length of a residue connected to a functional group, expressed as a number of carbon atoms, is specified with regard to the number of carbon atoms comprised by the residue, excluding the number of carbon atoms comprised by the functional group. Thus, for example, a C₁ monocarboxylic acid comprises two carbon atoms, of which one carbon atom is comprised by the carboxyl functional group and one carbon atom is comprised by the residue; in this example the C₁ monocarboxylic acid thus relates to acetic acid. In another example, a C₁ alkanol comprises one carbon atom, i.e. the carbon atom comprised by the C₁ residue which is connected to the hydroxyl functional group. The expression "a C₂ monoethylenically unsaturated dicarboxylic acid" may preferably represent fumaric acid or maleic acid (*i*.*e*. two carboxylic groups connected via a unsaturated C₂ (ethylenic) moiety).

The Tg (glass transition temperature, also T_{g}) of a polymer is preferably determined using differential scanning calorimetry. If the polymer is obtainable by emulsion polymerisation, the Tg of the polymer is determined as the Tg of a film formed from said polymer. The film is preferably dried at 100 °C for 1 hour immediately before measuring the Tg. A preferred method for determining the Tg of any one of polymer A, B or C is disclosed in DIN 53765, version March 1994, wherein the heating and cooling rates are preferably set at 10 K/min instead of at 20 K/min and wherein the sample size preferably ranges between 5-20 mg, especially between 5-10 mg.

### Polymer A

In one embodiment, polymer A is obtainable by polymerization of a monomer or a monomer mixture, wherein the monomer is selected from the group consisting of a vinylic ester of an aliphatic saturated monocarboxylic acid having a chain length of C₁-C₁₈, a diester of an alkanol having a chain length of C₁-C₁₈ and a monoethylenically unsaturated C₂-C₁₂ dicarboxylic acid, an acrylic ester of an alkanol having a chain length of C₁-C₁₈, a (meth)acrylic ester of an alkanol having a chain length of C₁-C₁₈, and an alpha-olefin having a chain length of C₂-C₁₈. Herein, a preferred alpha-olefin is ethylene. The vinylic ester of an aliphatic saturated monocarboxylic acid having a chain length of C₁-C₁₈ is preferably selected as vinyl propionate or, most preferably, as vinyl acetate. Polymer A is in further embodiment obtainable by polymerization of a monomer mixture comprising (1) a vinylic ester of an aliphatic saturated monocarboxylic acid having a chain length of C₁-C₁₈ and a diester of an alkanol having a chain length of C₁-C₁₈ and a monoethylenically unsaturated C₂-C₁₂ dicarboxylic acid, (2) a vinylic ester of an aliphatic saturated monocarboxylic acid having a chain length of C₁-C₁₈ and an alpha-olefm having a chain length of C₂-C₁₈, or (3) a vinylic ester of an aliphatic saturated monocarboxylic acid having a chain length of C₁-C₁₈ and an acrylic ester of an alkanol having a chain length of C₁-C₁₈, wherein the monomer mixture comprises said monomers in a total amount of at least 80 wt.%, more preferably of at least 90 wt.% with respect to the weight of the monomer mixture.

Polymer A is preferably a copolymer obtainable by polymerization of:
a. 40 to 97 parts by weight of a monomer selected from the group consisting of a vinylic ester of an aliphatic saturated monocarboxylic acid having a chain length of C₁-C₆, an acrylic ester of an alkanol having a chain length of C₁-C₆, and a methacrylic ester of an alkanol having a chain length of C₁-C₆; and
b. 3-60 parts by weight of a monoethylenically unsaturated monomer selected from the group consisting of a maleic mono- and/or diester of an alkanol having a chain length of C₁-C₁₈, a fumaric mono- and/or diester of an alkanol having a chain length of C₁-C₁₈, an acrylic ester of an alkanol having a chain length of C₁-C₁₈, a methacrylic ester of an alkanol having a chain length of C₁-C₁₈, an alpha-olefin having a chain length of C₂-C₁₈, acrylic acid, methacrylic acid, and itaconic acid.

Preferably, the monounsaturated C₂-C₁₂ dicarboxylic acid is maleic acid or fumaric acid, or a mixture thereof. The monomer mixture comprises or further comprises a monoethylenically unsaturated C₂-C₁₂ mono- or dicarboxylic acid or a salt thereof, or a mixture thereof. The mono-ethylenically unsaturated C₂-C₁₂ mono- or dicarboxylic acid is preferably selected from the group consisting of acrylic acid, methacrylic acid, itaconic acid, fumaric acid, maleic acid, a maleic mono-ester of an alkanol having a chain length of C₁-C₁₈, and a fumaric mono-ester of an alkanol having a chain length of C₁-C₁₈.

It is preferred that the vinylic ester of an aliphatic saturated monocarboxylic acid having a chain length of C₁-C₆ is vinyl acetate. Regarding the monomers under (a.), the (meth)acrylic ester of an alkanol having a chain length of C₁-C₁₈ is preferably selected as methyl (meth)acrylate. Regarding the monomers under (b.), it is preferred that the alkanol having a chain length of C₁-C₁₈ is preferably selected as propanol, butanol, pentanol, hexanol or octanol, or as a mixture thereof, and is most preferably selected as (*n*-)butanol. The alpha-olefin is preferably selected as ethylene or as octene or as a mixture thereof. The acrylic ester of an alkanol having a chain length of C₁-C₁₈ is preferably selected as (*n-*)butyl acrylate. The diester of an alkanol having a chain length of C₁-C₁₈ and a monoethylenically unsaturated C₂-C₁₂ dicarboxylic acid is preferably selected as dibutylmaleate or dibutylfumarate, or as a mixture thereof.

Polymer A is most preferably obtainable by polymerization of a monomer mixture comprising (1) vinyl acetate and dibutylmaleate, (2) vinyl acetate and ethylene), or (3) vinyl acetate and n-butylacrylate, wherein the monomer mixture preferably comprises said two different monomers in a total amount of at least 80 wt.%, more preferably of at least 90 wt.% with respect to the weight of the monomer mixture.

In an especially preferred embodiment, polymer A is obtainable by polymerisation of a monomer mixture comprising vinyl acetate and dibutyl maleate. It is preferred that the monomer mixture comprises vinyl acetate and dibutyl maleate in a total amount of at least 80 wt.%, more preferably in an amount of at least 90 wt.%, most preferably in an amount of at least. 95% wt.% with respect to the weight of the monomer mixture.

Preferably, the weight ratio of vinyl acetate to dibutyl maleate in the monomer mixture ranges between 80:20 - 40:60, even more preferably between 70:30 - 50:50.

In another preferred embodiment, polymer A is obtainable by polymerization of a monomer mixture comprising vinyl acetate and ethylene. It is preferred that the monomer mixture comprises vinyl acetate and ethylene in a total amount of at least 80 wt.%, more preferably in an amount of at least 90 wt.%, most preferably in an amount of at least 95 wt.% with respect to the weight of the monomer mixture. Most preferably, the monomer mixture consists of vinyl acetate and ethylene. Preferably, the weight ratio of vinyl acetate to ethylene in the monomer mixture ranges between 97:3 - 70:30, more preferably between 96:4-80:20, most preferably between 95:5 and 85:15.

In yet another preferred embodiment, polymer A is obtainable by polymerization of a monomer mixture comprising vinyl acetate and butylacrylate. It is preferred that the monomer mixture comprises vinyl acetate and butylacrylate in a total amount of at least 80 wt.%, more preferably in an amount of at least 90 wt.%, most preferably in an amount of at least. 95% wt.% with respect to the weight of the monomer mixture. Most preferably, the monomer mixture consists of vinyl acetate and butyl acrylate. Preferably, the weight ratio of vinyl acetate to n-butylacrylate in the monomer mixture ranges between 90:10 - 50:50.

In one embodiment the Tg of polymer A preferably resides between 10 and 21 °C, or more preferably between 13 and 21 °C. Accordingly, gloss of a dried film formed from the water-borne coating composition may be improved. Furthermore, grit formation during cutting may be further reduced.

By proper selection of (the relative amounts of) monomers, the Tg, in particular the Tg of polymer A, can be varied. For example, polymer A may be selected as a homopolymer having a suitable Tg, for example as a homopolymer of vinyl propionate. However, polymer A may also be selected as, for example, a copolymer comprising a "hard" monomer and a "soft" monomer. Herein, the "hard" monomer relates to a monomer which, when converted into a homopolymer, may have a Tg > 27 °C; the "soft" monomer relates to a monomer which, when converted into a homopolymer, may have a Tg < 27 °C. An especially preferred "hard" monomer is vinyl acetate. The Tg of poly(vinyl acetate) is approx. 38 °C. An especially preferred "soft" monomer may be selected from the group consisting of di(-n-)butylmaleate, di(-n-)butylfumarate, ethylene, (n-)butylacrylate and 2-ethylhexylacrylate. The higher the amount of the "soft" monomer relative to the "hard" monomer, the lower the Tg of the polymer. Small amounts of other monomers may be further polymerized with the monomer mixture. The glass transition temperature of many different polymers is suitably listed in handbooks and review articles.

### Polymer B

In one embodiment, polymer B is obtainable by polymerization of a monomer or a monomer mixture, wherein the monomer is selected from the group consisting of a vinylic ester of an aliphatic saturated monocarboxylic acid having a chain length of C₁-C₁₈, a diester of an alkanol having a chain length of C₁-C₁₈ and a monoethylenically unsaturated C₂-C₁₂ dicarboxylic acid, an acrylic ester of an alkanol having a chain length of C₁-C₁₈, a (meth)acrylic ester of an alkanol having a chain length of C₁-C₁₈, and an alpha-olefin having a chain length of C₂-C₁₈. Herein, a preferred alpha-olefin is ethylene. The vinylic ester of an aliphatic saturated monocarboxylic acid having a chain length of C₁-C₁₈ is preferably selected as vinyl propionate or, most preferably, as vinyl acetate. Polymer B is preferably obtainable by polymerization of a monomer mixture comprising (1) a vinylic ester of an aliphatic saturated monocarboxylic acid having a chain length of C₁-C₁₈ and a diester of an alkanol having a chain length of C₁-C₁₈ and a monoethylenically unsaturated C₂-C₁₂ dicarboxylic acid, (2) a vinylic ester of an aliphatic saturated monocarboxylic acid having a chain length of C₁-C₁₈ and an alpha-olefm having a chain length of C₂-C₁₈, or (3) a vinylic ester of an aliphatic saturated monocarboxylic acid having a chain length of C₁-C₁₈ and an acrylic ester of an alkanol having a chain length of C₁-C₁₈, wherein the monomer mixture comprises said monomers in a total amount of at least 80 wt.%, more preferably of at least 90 wt.% with respect to the weight of the monomer mixture. Polymer B is preferably a copolymer obtainable by polymerization of:
a. 40 to 97 parts by weight, more preferably 40 to 90 parts by weight of a monomer selected from the group consisting of a vinylic ester of an aliphatic saturated monocarboxylic acid having a chain length of C₁-C₆, an acrylic ester of an alkanol having a chain length of C₁-C₆, and a methacrylic ester of an alkanol having a chain length of C₁-C₆; and
b. 3-60 parts by weight, more preferably 10 to 60 parts by weight, of a monoethylenically unsaturated monomer selected from the group consisting of a maleic mono- and/or diester of an alkanol having a chain length of C₁-C₁₈, a fumaric mono- and/or diester of an alkanol having a chain length of C₁-C₁₈, an acrylic ester of an alkanol having a chain length of C₁-C₁₈, a methacrylic ester of an alkanol having a chain length of C₁-C₁₈, an alpha-olefin having a chain length of C₂-C₁₈, acrylic acid, methacrylic acid, and itaconic acid.

Preferably, the monounsaturated C₂-C₁₂ dicarboxylic acid is maleic acid or fumaric acid, or a mixture thereof. The monomer mixture comprises or further comprises a monoethylenically unsaturated C₂-C₁₂ mono- or dicarboxylic acid or a salt thereof, or a mixture thereof. The mono-ethylenically unsaturated C₂-C₁₂ mono- or dicarboxylic acid is preferably selected from the group consisting of acrylic acid, methacrylic acid, itaconic acid, fumaric acid, maleic acid, a maleic mono-ester of an alkanol having a chain length of C₁-C₁₈, and a fumaric mono-ester of an alkanol having a chain length of C₁-C₁₈.

It is preferred that the vinylic ester of an aliphatic saturated monocarboxylic acid having a chain length of C₁-C₆ is vinyl acetate. Regarding the monomers under (a.), the (meth)acrylic ester of an alkanol having a chain length of C₁-C₁₈ is preferably selected as methyl (meth)acrylate. Regarding the monomers under (b.), it is preferred that the alkanol having a chain length of C₁-C₁₈ is preferably selected as propanol, butanol, pentanol, hexanol or octanol, or as a mixture thereof, and is most preferably selected as (*n*-)butanol. The alpha-olefin is preferably selected as ethylene or as octene or as a mixture thereof. The acrylic ester of an alkanol having a chain length of C₁-C₁₈ is preferably selected as *(n-)*butyl acrylate. The diester of an alkanol having a chain length of C₁-C₁₈ and a monoethylenically unsaturated C₂-C₁₂ dicarboxylic acid is preferably selected as dibutylmaleate or dibutylfumarate, or as a mixture thereof.

Polymer B is most preferably obtainable by polymerization of a monomer mixture comprising at least two different monomers selected from (1) vinyl acetate and dibutylmaleate, (2) vinyl acetate and ethylene), or (3) vinyl acetate and n-butylacrylate, wherein the monomer mixture preferably comprises said two different monomers in a total amount of at least 80 wt.%, more preferably of at least 90 wt.% with respect to the weight of the monomer mixture.

In an especially preferred embodiment, polymer B is obtainable by polymerisation of a monomer mixture comprising vinyl acetate and dibutyl maleate. It is preferred that the monomer mixture comprises vinyl acetate and dibutyl maleate in a total amount of at least 80 wt.%, more preferably in an amount of at least 90 wt.%, most preferably in an amount of at least. 95% wt.% with respect to the weight of the monomer mixture. Preferably, the weight ratio of vinyl acetate to dibutyl maleate in the monomer mixture ranges between 60:40 - 40:60. In another embodiment, polymer B is obtainable by polymerization of (a monomer mixture comprising):
- vinyl acetate in an amount of less than 50 parts by weight, and
- dibutylmaleate in an amount of more than 50 parts by weight.

In yet another preferred embodiment, polymer B is obtainable by polymerization of a monomer mixture comprising vinyl acetate and butylacrylate. It is preferred that the monomer mixture comprises vinyl acetate and butylacrylate in a total amount of at least 80 wt.%, more preferably in an amount of at least 90 wt.%, most preferably in an amount of at least. 95% wt.% with respect to the weight of the monomer mixture.

In another preferred embodiment, polymer B is obtainable by polymerization of a monomer mixture comprising vinyl acetate and ethylene. It is preferred that the monomer mixture comprises vinyl acetate and ethylene in a total amount of at least 80 wt.%, more preferably in an amount of at least 90 wt.%, most preferably in an amount of at least. 95% wt.% with respect to the weight of the monomer mixture. Accordingly, it has been established that very favourable film properties may be obtained, especially with regard to grit formation and tackiness, of a film formed from the composition comprising polymer A and B (and if present, C; see below) especially if polymer A comprises vinyl acetate and dibutylmaleate, or if polymer A comprises vinyl acetate and ethylene. Most preferably, the monomer mixture consists of vinyl acetate and ethylene. For best results, it is preferred that polymer B is a copolymer obtainable by polymerization of
- 70 to 85 parts by weight of vinyl acetate, and
- 15 to 30 parts by weight of ethylene.

As indicated above, polymer B has a T_{g}(B) < 8 °C, especially a T_{g}(B) < 5 °C. It is especially preferred that polymer B has a T_{g}(B) which resides between -80 and 8 °C, more preferably between -40 and 8 °C, even more preferably between -10 and 8 °C, most preferably between -5 and 5 °C. Accordingly, an especially favourable balance of film properties may be obtained, especially with regard to grit formation and tackiness of a film formed from the composition.

By proper selection of (the relative amounts of) monomers, the Tg, in particular the Tg of polymer B, can be varied. For example, polymer B may be selected as a homopolymer having a suitably low Tg, for example as a homopolymer of n-butylacrylate. However, polymer B may also be selected as a copolymer comprising a "hard" monomer and a "soft" monomer. Herein, the "hard" monomer relates to a monomer which, when converted into a homopolymer, may have a Tg > 27 °C; the "soft" monomer relates to a monomer which, when converted into a homopolymer, may have a Tg < 27 °C. An especially preferred "hard" monomer is vinyl acetate. An especially preferred "soff" monomer may be selected from the group consisting of di(-n-)butylmaleate, di(-n-)butylfumarate, ethylene, (n-)butylacrylate and 2-ethylhexylacrylate. The higher the amount of the "soft" monomer relative to the "hard" monomer, the lower the Tg of the polymer. Small amounts of other monomers may be further polymerized with the monomer mixture. The glass transition temperature of many different polymers is suitably listed in handbooks and review articles.

### Optional polymer C

In a preferred embodiment, the coating composition further comprises a polymer C in an amount of 1-10 parts by weight, wherein polymer C has a glass transition temperature T_{g}(C) of 27 °C or higher, especially of 30 °C or higher. Accordingly, tack of a film formed by drying the coating composition may be (further) reduced. It is preferred that the weight ratio of polymer C to the sum of polymers A and B ranges between 0.5 : 99.5 and 15:85, especially between 1:99 and 10:90.

Polymer C is preferably obtainable by emulsion polymerization. Polymer C is preferably obtainable by polymerization of a monomer or a monomer mixture, wherein the monomer is selected from the group consisting of a vinylic ester of an aliphatic saturated monocarboxylic acid having a chain length of C₁-C₆, an acrylic ester of an alkanol having a chain length of C₁-C₆, a methacrylic ester of an alkanol having a chain length of C₁-C₆, a monoethylenically unsaturated C₂-C₁₂ monocarboxylic acid or a salt thereof, and a monoethylenically unsaturated C₂-C₁₂ dicarboxylic acid or a salt thereof. Herein, the vinylic ester of an aliphatic saturated monocarboxylic acid having a chain length of C₁-C₆ is preferably selected as vinyl acetate. The (meth)acrylic ester of an alkanol having a chain length of C₁-C₆ is preferably selected as methyl (meth)acrylate.

In a preferred embodiment, polymer C is a homopolymer. It is further preferred that polymer C is obtainable by polymerization of a vinylic ester of an aliphatic saturated monocarboxylic acid having a chain length of C₁-C₆, of an acrylic ester of an alkanol having a chain length of C₁-C₆, or of a methacrylic ester of an alkanol having a chain length of C₁-C₆. In a preferred embodiment, the vinylic ester of an aliphatic saturated monocarboxylic acid having a chain length of C₁-C₆ is vinyl acetate. The (meth)acrylic ester of the alkanol having a chain length of C₁-C₆ is preferably selected as methyl (meth)acrylate. Most preferably, polymer C is a vinyl acetate homopolymer.

### Further embodiments of the polymers

### Polymers A and B - general preferences

It is preferred that each of polymer A and B and, if present C is obtainable by emulsion polymerization.

Polymers A and B, and if present, polymer C are preferably each of food-grade quality. It is noted that especially for polymers A and B, ethylene is a preferred comonomer, especially with vinyl acetate. Vinyl acetate and especially ethylene are quite volatile, so that polymers essentially consisting of vinyl acetate and ethylene may have relatively low free monomer content.

It is preferred that each of polymer A, polymer B and, if present polymer C, comprise a vinylic ester of an aliphatic saturated monocarboxylic acid having a chain length of C₁-C₆, preferably vinyl acetate. Accordingly, these polymers may have a favourable compatibility with each other.

Advantageously, each of polymer A, polymer B and/or polymer C, if present, is prepared in the presence of 0.1-3 parts by weight, preferably 0.1 to 1 parts by weight, based on the total weight of the monomer or monomer mixture, of an emulsifier, preferably a nonionic and/or an anionic emulsifier. Accordingly, a polymer emulsion comprising said polymers may have a suitable stability and possess a favourable surface tension for coating cheese.

In a preferred embodiment, one of, or more preferably each of polymer A and polymer B is (preferably further) obtainable by emulsion polymerisation in the presence of a protective colloid, preferably poly(vinyl alcohol). In an embodiment, also polymer C, if present, is (further) obtainable by emulsion polymerisation in the presence of a protective colloid, preferably poly(vinyl alcohol). Accordingly, a coating composition of suitable high viscosity may be obtained, preferably with the addition of thickening agents in an amount of 0-1 wt.%, more preferably 0-0.5 wt.% with regard to the total weight of the water-borne coating composition. The term "thickening agents" is known to the skilled person and may, for example, be selected as a cellulose ether, a starch, a starch derivative, or a gum. Especially preferred thickening agents may be selected from the group consisting of hydroxyethylcellulose, methylcellulose, an alkali metal carboxymethylcellulose (preferably sodium carboxymethylcellulose), xanthan gum, guar gum and locust bean gum.

It is preferred that polymer A is (preferably further) prepared in the presence of 1-12 parts by weight, preferably 3 to 8 parts by weight, based on the total weight of the monomer or monomer mixture, of a protective colloid. It is preferred that also polymer B is (preferably further) prepared in the presence of 1-12 parts by weight, preferably 3 to 8 parts by weight, based on the total weight of the monomer or monomer mixture, of a protective colloid. In another embodiment, each of polymer A, polymer B and polymer C are (preferably further) prepared in the presence of 1-12 parts by weight, preferably 3 to 8 parts by weight, based on the total weight of the monomer or monomer mixture, of a protective colloid. Preferably, the protective colloid is selected from the group consisting of a poly(vinyl alcohol), a poly(vinyl pyrrolidone), and a cellulose ether and most preferably the protective colloid is a poly(vinyl alcohol).

In a further preferred embodiment, polymers A and B are copolymers obtainable by emulsion polymerization, in the presence of poly(vinyl alcohol), and polymer C, if present, is a homopolymer obtainable by emulsion polymerisation, in the presence of poly(vinyl alcohol). According to this further preferred embodiment, as an example, polymer A may be obtained as Mowilith® SDM 4230 KL (Celanese Emulsions, Frankfurt, Germany), polymer B may be obtained as EVA202 (Vinavil®, Italy) and polymer C, if present, may be obtained as Mowilith® DN50 (Celanese Emulsions, Frankfurt, Germany). Advantageously, the composition according to this embodiment provides for good storage stability; in addition, a dried coating obtained from said mixture has particularly favourable mechanical properties under conditions which are relevant for the production and/or processing of cheese.

In another preferred embodiment, polymer C, if present, is obtainable by emulsion polymerisation in the presence of an emulsifier and in the absence of a protective colloid. Accordingly, a coating composition is provided which still has sufficient viscosity - albeit at a higher solid matter content - in addition to favourable storage stability. Moreover, a dried film formed from said composition has comparable mechanical properties whilst providing an improved gloss, as compared with a composition wherein polymer C is obtainable by emulsion polymerisation in the presence of a protective colloid. A particularly preferred polymer C according to this embodiment is Mowilith® DV (50%), or another poly(vinyl acetate) homopolymer obtainable by emulsion polymerisation in the presence of a nonionic and/or an anionic emulsifier. According to this embodiment, it is further preferred that polymer A - and further preferably also polymer B - is a copolymer obtainable by emulsion polymerization, in the presence of poly(vinyl alcohol).

### Preferred coating compositions

The proportion of polymer B is preferably 15 wt.%, more preferably 20 wt.% or 25 wt.% or higher with respect to the total weight of polymer present in the coating composition. The proportion of polymer B is preferably 60 wt.%, more preferably 50 wt.% or lower with respect to the total weight of polymer present in the coating composition. A preferred coating composition comprises or more preferably consists of
(i) 25-60 wt.%, with respect to the total weight of the composition, of polymer A and polymer B and, if present, polymer C;
(ii) 0-10 wt.%, with respect to the total weight of the composition, of an additive; and
(iii) water.

It is noted that the expression under (i) reflects that the sum of the respective amounts of polymers A, B and if present C, expressed as a weight percentage with respect to the total weight of the composition is 25-60 wt.%.

An even more preferred coating composition comprises or more preferably consists of
(i) 30-50 wt.%, with respect to the total weight of the composition, of polymer A and polymer B and, if present, polymer C;
(ii) 0-5 wt.%, with respect to the total weight of the composition, of an additive; and
(iii) water.

Accordingly, when applied using conventional automatic coating devices for cheese, the coating composition may allow for protection of the cheese with a sufficiently thick layer whilst the drying time of the coating layer on the cheese may be still acceptable.

A preferred water-borne composition for coating a cheese comprises in an embodiment 90-20, preferably 90-40 parts by weight of a polymer A and 10-80, preferably 10-60 parts by weight of a polymer B, wherein polymer A preferably has a glass transition temperature T_{g}(A) of 10-27 °C, wherein polymer B preferably has a glass transition temperature T_{g}(B) of less than 8 °C, wherein:
(a) Polymer A is obtainable by emulsion polymerization of a monomer mixture comprising (1) vinyl acetate in an amount of preferably 50-70 parts by weight and (2) dibutyl maleate in an amount of preferably 30-50 parts by weight; and polymer B is obtainable by emulsion polymerization of a monomer mixture comprising (1) vinyl acetate in an amount of preferably 10-50 parts by weight and (2) dibutylmaleate in an amount of preferably 50-90 parts by weight; or wherein
(b) Polymer A is obtainable by emulsion polymerization of a monomer mixture comprising (1) vinyl acetate in an amount of preferably 50-70 parts by weight and (2) dibutyl maleate in an amount of preferably 30-50 parts by weight; and polymer B is obtainable by emulsion polymerization of a monomer mixture comprising (1) vinyl acetate in an amount of preferably 70-85 parts by weight and (2) ethylene in an amount of preferably 15-30 parts by weight; or wherein
(c) Polymer A is obtainable by emulsion polymerization of a monomer mixture comprising (1) vinyl acetate in an amount of preferably 85-95 parts by weight and (2) ethylene in an amount of preferably 5-15 parts by weight; and polymer B is obtainable by emulsion polymerization of a monomer mixture comprising (1) vinyl acetate in an amount of preferably 10-50 parts by weight and (2) dibutylmaleate in an amount of preferably 50-90 parts by weight; or wherein
(d) Polymer A is obtainable by emulsion polymerization of a monomer mixture comprising (1) vinyl acetate in an amount of preferably 85-95 parts by weight and (2) ethylene in an amount of preferably 5-15 parts by weight; and polymer B is obtainable by emulsion polymerization of a monomer mixture comprising (1) vinyl acetate in an amount of preferably 70-85 parts by weight and (2) ethylene in an amount of preferably 15-30 parts by weight.

An even more preferred water-borne composition for coating a cheese comprises 90-20, preferably 90-40 parts by weight of a polymer A and 10-80, preferably 10-60 parts by weight of a polymer B, wherein polymer A has a glass transition temperature T_{g}(A) of 12-27 °C, wherein polymer B has a glass transition temperature T_{g}(B) of less than 12 °C, preferably of less than 8 °C, and wherein:
(a) Polymer A is obtainable by emulsion polymerization of (1) vinyl acetate in an amount of 50-70 parts by weight and (2) dibutyl maleate in an amount of 30-50 parts by weight; and polymer B is obtainable by emulsion polymerization of (1) vinyl acetate in an amount of 10-50 parts by weight and (2) dibutylmaleate in an amount of 50-90 parts by weight; or wherein
(b) Polymer A is obtainable by emulsion polymerization of (1) vinyl acetate in an amount of 50-70 parts by weight and (2) dibutyl maleate in an amount of 30-50 parts by weight; and polymer B is obtainable by emulsion polymerization of (1) vinyl acetate in an amount of 70-85 parts by weight and (2) ethylene in an amount of 15-30 parts by weight; or wherein
(c) Polymer A is obtainable by emulsion polymerization of (1) vinyl acetate in an amount of 85-95 parts by weight and (2) ethylene in an amount of 5-15 parts by weight; and polymer B is obtainable by emulsion polymerization of (1) vinyl acetate in an amount of 10-50 parts by weight and (2) dibutylmaleate in an amount of 50-90 parts by weight; or wherein
(d) Polymer A is obtainable by emulsion polymerization of (1) vinyl acetate in an amount of 85-95 parts by weight and (2) ethylene in an amount of 5-15 parts by weight; and polymer B is obtainable by emulsion polymerization of (1) vinyl acetate in an amount of 70-85 parts by weight and (2) ethylene in an amount of 15-30 parts by weight.

According to this specific embodiment, the monomer mixtures referred to in (a)-(d) preferably comprise no further monomers. Hence, in a specific embodiment the monomer mixtures referred to in (a)-(d) substantially consist of polymers based on the indicated monomers, and no other monomers.

The additive may be an additive composition, said additive being preferably selected from the group consisting of an acid, a lye, a buffer salt, a colorant, an anti-oxidant, a thickener, a preservative, a hydroxylic solvent (preferably mono propylene glycol), a fungicide (preferably natamycin), and mixtures thereof.

The coating composition preferably has a Brookfield viscosity of 1000-15000 mPa.s, wherein the Brookfield viscosity is determined according to a method based on ISO 2555. In this method, the viscosity of the coating composition is measured at 23°C using a Brookfield viscometer type LVDV-E operated at speed 30 rpm using spindle number 4. The viscosity meter is levelled and the spindle is attached to the apparatus.

The spindle is then immersed into the sample up to the mark on the spindle. The measurement is started and the result is taken at steady state or after one minute.

Most preferably, the Brookfield viscosity of the coating composition thus determined is 2000 to 10000 mPa.s. Preferably, the coating compositions have a Brookfield viscosity which is stable in time.

The coating composition according to the present invention, after drying, provides good film properties under a wide range of ripening, storage and transportation conditions. The presence of polymer C may reduce blocking of a film formed from the coating composition, especially at a temperature of 15° to 25 °C. The coating compositions are preferably free of phtalates. The coating compositions defined herein are suitable to be used in the present method for coating a cheese. The coating composition according to the present invention can also be used to coat other food products, in particular sausages.

### Further embodiments of the method for coating a cheese

The present invention relates to a method for coating a cheese, wherein a coating composition is applied to a surface of the cheese. It is preferred that the method further comprises drying the coated cheese thus obtained. Herein, the applied coating composition is allowed to form a plastic film on the surface of the cheese. Optionally, the method further comprises applying a layer of a paraffin-based wax on the dried coated cheese. It is further preferred that the cheese thus obtained is subsequently cut (into pieces) or sliced, whereby the temperature of the cheese and especially at its surface (most preferably at the outer layer of the dried coating composition on the cheese) is preferably between 0 and 12 °C, especially between 2 and 10 °C, most preferably between 3 and 8 °C. The cheese is preferably a semi-hard or hard cheese. The cheese has been preferably ripened during at least 24-28 days, more preferably during at least several weeks, preferably until 3 months, 6 months, 1 year or 2 years. Preferably, as is known to the skilled person, the cheese receives at regular intervals a treatment with the coating composition during ripening; after providing the coating composition to the cheese, the coating composition is allowed to dry under conditions which are preferably similar as the conditions (e.g. controlled temperature and relative humidity) which are required for its ripening. Consequently, multiple layers of the coating composition, with intermittent drying of the coating composition on the cheese, may be applied to a surface of the cheese, preferably until the cheese has obtained an age of 24 days, more preferably of at least four weeks, and preferably until 2 years, more preferably until 1 year, even more preferably until 6 months and most preferably until 3 months.

The semi-hard or hard cheese is preferably selected from the group consisting of Gouda, Edam, Maasdam, Leerdam, Emmental, Gruyère, and Parmesan.

During drying, the cheese preferably resides on a wooden cheese board, whilst it is preferably exposed to the ripening conditions mentioned above. The cheese is then turned and another layer of the coating composition is applied to the thus exposed (upper) surface of the cheese. This process of coating, drying and turning is repeated until the cheese has reached its desired age, which is preferably at least 24 days, more preferably at least four weeks, and preferably until 2 years, more preferably until 1 year, even more preferably until 6 months and most preferably until 3 months..

The method for coating the cheese further preferably comprises drying the applied coating composition at a temperature of 0°-15°C, more preferably between 10°-15°C, and at a relative humidity (RH) of 60-99%, more preferably between 75-95%, most preferably between 80-90%. Ripening at 0°-15°C, preferably at a relative humidity of 80-90%, is referred to as 'cold ripening'.

The method for coating the cheese preferably further comprises drying the applied coating composition at a temperature of 15°-25°C, more preferably 17°-23°C, and at a relative humidity of 60-99%, more preferably 75-95%, most preferably 80-90%. Herein this is referred to as "heated ripening". If desired, the ripening process of a cheese can be accelerated, and/or special effects can be achieved during ripening, for example the evolution of CO₂ within a cheese as to promote the formation of holes (or eyes) in the cheese. "Heated ripening" is preferably employed in the production of cheese comprising so-called propioni-bacteria, preferably Maasdam or Emmental.

According to the invention, the method of "cold ripening" is preferred.

The method according to the invention may also comprise residing of the cheese on a cheese board for 12h-2 weeks, more preferably for 24h-1 week, wherein the surface of the cheese which is in contact with the cheese board has one or more dried layers of the coating composition according to the present invention. The cheese on the cheese board may be exposed to a temperature of 0°-15°C and to a relative humidity of 70-90%. Alternatively, during heated ripening, the cheese on the cheese board may be exposed to a temperature of 15°-25°C and to a relative humidity of 70-90%.

It appears that the surface of the cheese which is in contact with the cheese board may become attached to the cheese board in time. This phenomenon is called "blocking to the board" and is a special example of the aforementioned "tack" or "film tack" of a dried film obtained by drying the coating composition. As a result of this blocking phenomenon, the removal of the cheese from the cheese board is impaired. Consequently, the coating layer on that side of the cheese which is in contact with the cheese board may be damaged during turning of the cheese. Alternatively, the automatic turning process is impeded and the turning of the cheese has to be manually assisted, which is very labour intensive and, hence, cost intensive. In fact, blocking to the board is a frequently occurring problem in the cheese making industry, which problem is difficult to circumvent without the introduction of other artefacts. The provision of polymer C to the cheese coating composition in the indicated amounts especially reduces "blocking to the board."

In a further embodiment the method according to the invention further comprising the steps of
- drying the coated cheese, and
- cutting or slicing the dried cheese.

Preferably, during cutting or slicing the dried cheese, it has a (surface) temperature of between 0 and 12 °C, more preferably of between 2 and 10 °C, most preferably of between 3 and 8 °C.

### Use of a coating composition

In an aspect, the invention relates to the use of a cheese coating composition comprising the polymer B as defined above for improving slicing or cutting behaviour of a cheese. The coating composition preferably also comprises the polymer A as defined above. Preferably, polymer A herein has a glass transition temperature T_{g}(A) of 10-27 °C and polymer B herein has a glass transition temperature T_{g}(B) of less than 8 °C. The proportion of polymer B is preferably 25 wt.% or higher with respect to the total weight of polymer present in said cheese coating composition. The proportion of polymer B is preferably 60 wt.%, more preferably 50 wt.% or lower with respect to the total weight of polymer present in the coating composition. The cheese coating composition is preferably the water-borne coating composition according to the invention.

Most preferably, the invention relates to the use of the cheese coating composition according to the present invention and as defined above, for improving slicing or cutting behaviour of a cheese.

Herein, improving slicing or cutting behaviour of a cheese preferably comprises reducing grit formation during slicing or cutting thereof.

Preferably, in the use according to the invention, the cheese, when sliced or cut, has a temperature, at its surface, of between 0 and 12 °C, more preferably of between 2 and 10 °C, most preferably of between 3 and 8 °C.

### Cheese

The invention also provides a cheese obtainable according to the method for coating a cheese according to the present invention. The present invention thus relates to a cheese obtainable by coating the surface of the cheese with a water-borne coating composition comprising 90-20, especially 90-40 parts by weight of a polymer A and 10-80, especially 10-60 parts by weight of a polymer B, wherein polymer A is a poly(vinyl ester) polymer having a glass transition temperature T_{g}(A) of 12-27 °C and wherein polymer B has a glass transition temperature T_{g}(B) of less than 12 °C, preferably of less than 8 °C. Alternatively, and even more preferably, polymer A herein has a glass transition temperature T_{g}(A) of 10-27 °C and polymer B herein has a glass transition temperature T_{g}(B) of less than 8 °C.

The invention especially relates to a sliced or cut cheese obtainable by the method for coating a cheese, said method preferably further comprising drying the coated cheese and slicing or cutting the cheese thus obtained. The cheese, especially the sliced or cut cheese is preferably free of grit.

### EXAMPLES

### Raw materials, experimental approach

Mowilith® SDM 4230 KL (Celanese, Frankfurt am Main) was employed as a source of polymer A. Mowilith® SDM 4230 KL is water-borne polymer emulsion comprising about 45 wt.% of a copolymer of vinyl acetate and dibutyl maleate, which has been obtained by emulsion polymerisation in the presence of poly(vinyl alcohol).

Vinavil® EVA 202 was employed as a source of polymer B. This product (obtainable from Vinavil, Italy) is a water-borne polymer emulsion comprising about 55 wt.% of a copolymer of vinyl acetate and ethylene. The polymer emulsion was prepared in the presence of poly(vinyl alcohol).

The weight ratio of vinyl acetate to dibutyl maleate in polymer A was determined by ¹H-NMR to be 56:44. The T_{g} of a film formed from Mowilith® SDM 4230 KL, and hence the Tg of polymer A was determined as 16 °C (DIN 53765-A-10: DSC, heating rate 10 K/min, film was dried at 100 °C during 1 hour)).

The weight ratio of vinyl acetate to ethylene in polymer B was determined by ¹H-NMR to be 81:19. The T_{g} of a film formed from EVA 202, and hence the Tg of polymer B was determined as 1°C (DIN 53765-A-10: DSC, heating rate 10 K/min, film was dried at 100 °C during 1 hour). The measurements of the T_{g} of the films formed from all samples were reproducible between duplicates within 1 °C.

Polymer A (provided as Mowilith® SDM 4230) and Polymer B (provided as EVA 202) were mixed in various proportions, with the addition of water if necessary, to form a coating composition. The coating compositions obtained were allowed to dry and several properties of the films thus obtained were assessed, in particular with regard to cutting properties. The specific methods are outlined below.

### Methods

DSC. The value of the glass transition temperature depends on the methodology. Therefore the method is described here which is based on DIN 53765-A-10. The DSC used was a Mettler-Toledo DSC822^{e} equipped with a HSS7 sensor cell which allows accurate measurement of the glass transition. A polymer film was prepared by metering a dispersion onto a glass plate using a 20 mils bird applicator from Byk Gardner. The film was dried at ambient conditions. After over night drying a 20 µL Aluminium crucible with lid (type ME-51119810 Al-light crucible) was filled with 5 to 10 mg of polymer film. The sample was dried by putting the charged crucible with the lid loos on top in a preheated oven of 100°C. After 1 hour the crucible was quenched to room temperature on a steel plate. Then the lid was closed. The following temperature programme was used to determine the Tg:
1) Dynamic: from 25°C to 100°C with 10 K/min
2) Isothermic: 2 minutes at 100°C
3) Dynamic: from 100 °C to -50°C with 10 K/min
4) Isothermic: 2 minutes at -50°C
5) Dynamic (Tg measurement): from -50°C to 100°C with 10 K/min
The Tg value was determined from the thermogram as the midpoint of the transition.

Film preparation. Different base dispersions were mixed into the desired ratio and diluted to a certain weight % dry solids with tap water. The dispersion was mixed by hand and the dry solids was determined (DIN ISO 3251), as well as Brookfield viscosity (DIN EN ISO 2555) and temperature. The dispersions were metered with a 10 mils bird applicator on black and white Byko charts (Byk-Gardner Opacity charts). The film was dried at room temperature during 24 hours. Then the charts were conditioned at cheese room conditions (84% relative humidity and 13°C) or at cold storage conditions (6-7°C) for at least 24 hours. Hereto the samples were stored in a cheese ripening room or refrigerator.

Cutting. To assess the cutting properties a new test method was developed. The charts obtained under 'film preparation' were cut using a paper cutter at cheese room or refrigerator conditions. The paper cutter was of the brand Ideal, type 1034, made in Germany. In case of cutting at cheese room conditions the paper cutter and charts were equilibrated for 24 hours at 13°C and 84% relative humidity. The charts were cut in the cheese room. In case of cutting at storage room condition the samples were taken from the refrigerator and immediately cut with the paper cutter. The charts were cut on the black part of the chart. The cut was made in one smooth movement. The cut was assessed visually according to the rating in Table 1.

**Table1:Rating of cut with paper cutter**

| *Rating* | *Cut characteristic* |
|---|---|
| 0 | Smooth cut, no cracks |
| 1 | Small cracks without spalling |
| 2 | Cracks without spalling |
| 3 | Large cracks with spalling, grit formation |
| 4 | Complete spalling, grit formation |

### Example 1.

Mowilith® SDM 4230 was mixed with EVA 202 in different ratios. In Table 2) properties of the dispersion and film characteristics are presented.

**Table 2: Properties of compositions and corresponding film properties of coating compositions according to Example 1.**

| Composition | | Properties of coating composition | | | Film cutting | |
|---|---|---|---|---|---|---|
| [w/w] | | T | Viscosity ⁽¹⁾ | d.s. ⁽²⁾ | T | Rating |
| 4230 | EVA 202 | [°C] | [mPas] | [%] | [°C] | [.] |
| 100 | 0 | 24.3 | 6540 | 40.3 | 5.4 | 3 |
| 75 | 25 | 242 | 2400 | 42.0 | 3.9 | 1 |
| 50 | 50 | 24.3 | 960* | 37.9 | 5.2 | 0 |
| 25 | 75 | 24.3 | 480* | 40.8 | 4.5 | 0 |

| | | | | | | |
|---|---|---|---|---|---|---|
| * viscosity too low to measure accurately with Brookfield LVDV at 30 rpm with spindle 6 (1) Brookfield viscosity is determined according to a method based on ISO 2555. The viscosity of the samples was measured at 23°C using a Brookfield viscometer type LVDV-E operated at speed 30 rpm using spindle number 4. The viscosity meter was levelled and the spindle was attached to the apparatus. The spindle was immersed into the sample up to the mark on the spindle. The measurement was started and the result was taken at steady state or after one minute. (2) Solid matter content was determined according to a method based on ISO 1625. Thus, a small amount of a coating composition was weighed onto a flat surface provided by a first culture dish (diameter ± 60 mm), and a surface of a second culture dish was pressed against the surface of the first culture dish, comprising the coating composition. The weights of the two culture disks were known to the nearest mg. A thin film was applied on the two surfaces of the culture dishes by gently moving the touching surfaces in circular or ellipsoidal orbits. The dishes were then separated to expose their coated surfaces to the atmosphere. The dishes were then transferred into an oven which was heated to 105°C, and left at that temperature for one hour. Afterwards, the dishes were transferred into a desiccator and allowed to cool to room temperature. The dishes were weighed with the attached films to the nearest 1 mg, and the solid matter content was calculated from the difference between the mass of the applied wet coating composition and the weight of the dry film. | | | | | | |

The results clearly demonstrates clearly that polymer B improves the cutting properties of the film at low temperatures.

### Example 2

A Dutch cheese, type Gouda, produced by Frico Cheese (Gerkesklooster, the Netherlands) having a fat content in the solid matter content of 48%, and having a nominal weight of 4.5 kg, is taken out of the brine bath and coated according to a coating protocol which is generally as follows:

Specifically, approximately 3 to 4 days after production, within a few hours after coming out of the brine, the cheeses are placed on wooden shelves, and by manual application (using a sponge) receive a thin coating layer on the top cylindric half of the cheese as well as on the sides. The amount of coating which is applied in one run ranges (on average) between 5 and 10 g (total weight basis). The coating is allowed to dry for between one to three days, the cheeses are turned on the shelves and the procedure is repeated until the cheeses reach an age of 29 days after production. More precisely, the coating scheme which was employed is as follows (turning of the cheese followed by half-side coating of the cheese): at 4, 5, 7, 10, 13, 15, 17, 19, 24, 25 days after production. The storage conditions are controlled at a temperature of 13 +/- 1 °C and at a relative humidity of 85 +/- 3%.

**Table 3:Physico-chemical characteristics of cheese coating compositions according to Example 2**

| Composition | Viscosity^{a} [mPas] | Solid matter^{b} [%] | pH [-] | Tg^{o} [°C] |
|---|---|---|---|---|
| Ceska-coAt® WL 250.03.40 | 4220 | 40 | 4.7 | 14 |
| SDM42JOIEVA202 50/50 | 4660 | 40 | 4.6 | 1 and 17 |

| | | | | |
|---|---|---|---|---|
| a) According to ISO 2555; Brookfield viscosimeter LVT, spindle 4, 30 rpm, 23°C. b) According to ISO 1625. c) Glass transition temperature, measured according to DIN 53765-A-10. | | | | |

Table 3 summarises the characteristics of the cheese coating compositions. Table 4 summarises the cheese coating properties at a cheese age of 15 days. A reference coating (Ceska-coAt® WL 250.03.40, of CSK Food Enrichment B.V., Leeuwarden, The Netherlands) is compared to a cheese coating with improved cutting properties having the same natamycin content (250 ppm), colour strength (0.3% Annatto WS solution of CSK Food Enrichment B.V., Leeuwarden, The Netherlands) and comparable Brookfield viscosity (4500 mPas +/- 500 mPas).

**Table 4 Properties of applied cheese coating compositions after 15 days**

| Composition | Blocking to cheese sides^{a} | Blocking after piling^{b} | Gloss^{c} | Crackling^{d} |
|---|---|---|---|---|
| Ceska-coAt® WL 250.03.40 | Excellent | Moderate | Good | Moderate |
| SDM 4230/EVA202 50/50 | Excellent | Moderate | Excellent | Excellent |

| | | | | |
|---|---|---|---|---|
| a) Blocking to cheeses is defined as the extent of adhesion of cheese sides to each other, and evaluated by a panel of persons skilled in the art. b) Blocking after piling is defined as the extent of adhesion of cheeses to each other when four cheeses are piled on top of each other for 5 hours at cheese room conditions, and evaluated by a panel of persons skilled in the art. c) Gloss is visually observed and evaluated by a panel of persons skilled in the art. d) Crackling under stress is the extent of crackling of the coating when the cheese is dropped onto the floor from a height of 1 meter, as evaluated by a panel of persons skilled in the art. | | | | |

It is noted that a cheese coated with EVA202 alone will suffer from inacceptable blocking (or tackiness).

This example shows that cutting properties may be improved while other film properties remain the same or even improve.

The results of coating compositions with improved cutting properties were confirmed in further experiments involving coated cheeses. Gouda cheeses were ripened according to a Gouda protocol with intermittent treatments with the above-mentioned compositions as is known to the skilled person. When the cheeses had been ripened for 3 months, they were sliced mechanically. Before slicing, care was taken that the lastly applied coating layer had been allowed to dry to the air for at least 24 hours. Especially when cheeses were stored at reduced temperatures (6°C) before slicing, coating compositions which contained polymer A and polymer B at 25 wt% or more, showed considerably and significant less grit formation during slicing as compared with cheeses having received coating compositions comprising polymer A only.

It is noted that the cheeses having been treated with coating compositions consisting of 100% polymer B suffered from unacceptable film tack. However, all other coating compositions were acceptable in terms of film tack.

## Claims

1. A method for coating a cheese, wherein a water-borne coating composition is applied to a surface of the cheese, said coating composition comprising 90-40 parts by weight of a polymer A and 10-60 parts by weight of a polymer B, wherein polymer A and polymer B are each selected from the group consisting of a polyvinyl ester and a poly(meth)acrylate, wherein polymer A has a glass transition temperature T_{g}(A) of 10-27 °C and wherein polymer B has a glass transition temperature T_{g}(B) of less than 8 °C.

2. The method according to any claim 1, wherein polymer A and polymer B are poly(vinyl ester)s.

3. The method according to claim 1 or 2, wherein polymer A and polymer B are copolymers obtainable by polymerization of:
(a) 40 to 97 parts by weight of a monomer selected from the group consisting of a vinylic ester of an aliphatic saturated monocarboxylic acid having a chain length of C₁-C₆, and
(b) 3 to 60 parts by weight of a monoethylenically unsaturated monomer selected from the group consisting of a maleic mono- and/or diester of an alkanol having a chain length of C₁-C₁₈, a fumaric mono- and/or diester of an alkanol having a chain length of C₁-C₁₈, an acrylic ester of an alkanol having a chain length of C₁-C₁₈, a methacrylic ester of an alkanol having a chain length of C₁-C₁₈, an alpha-olefin having a chain length of C₂-C₁₈, acrylic acid, methacrylic acid and itaconic acid.

4. The method according to any one of the preceding claims, wherein polymer A is obtainable by polymerization of a monomer mixture comprising vinyl acetate and dibutyl maleate, or by polymerization of a monomer mixture comprising vinyl acetate and ethylene.

5. The method according to any one of the preceding claims, wherein polymer B is obtainable by polymerization of a monomer mixture comprising vinyl acetate and ethylene.

6. The method according to any one of the preceding claims, wherein the coating composition further comprises a polymer C in an amount of 1-10 parts by weight, wherein polymer C has a glass transition temperature T_{g}(C) of 27 °C or higher.

7. The method according to any one of claims 5-6, wherein polymer C is obtainable by polymerization of a monomer or a monomer mixture, wherein the monomer is selected from the group consisting of a vinylic ester of an aliphatic saturated monocarboxylic acid having a chain length of C₁-C₆, an acrylic ester of an alkanol having a chain length of C₁-C₆, a methacrylic ester of an alkanol having a chain length of C₁-C₆, a monoethylenically unsaturated C₂-C₁₂ monocarboxylic acid or a salt thereof, and a monoethylenically unsaturated C₂-C₁₂ dicarboxylic acid or a salt thereof.

8. The method according to any one of claims 5-7, wherein polymer C is a vinyl acetate homopolymer.

9. The method according to any one of the preceding claims, wherein the coating composition comprises:
(i) 25-60 wt.%, with respect to the total weight of the composition, of polymer A and polymer B and, if present, polymer C;
(ii) 0-10 wt.%, with respect to the total weight of the composition, of an additive; and
(iii) water.

10. The method according to any one of the preceding claims further comprising the steps of
- drying the coated cheese, and
- cutting or slicing the dried cheese.

11. Use of a cheese coating composition comprising a polymer B for improving slicing or cutting behaviour of a cheese, wherein polymer B is defined according to any one of claims 1-10.

12. Use according to claim 11, wherein improving slicing or cutting behaviour of a cheese comprises reducing grit formation during slicing or cutting thereof.

13. Use according to any one of claims 11-12, wherein the cheese, when sliced or cut, has a temperature, at its surface, of between 2 and 10 °C.

14. Cheese, cut cheese or sliced cheese obtainable by the method according to any one of claims 1-10.

15. A water-borne composition for coating a cheese comprising 90-40 parts by weight of a polymer A and 10-60 parts by weight of a polymer B, wherein polymer A has a glass transition temperature T_{g}(A) of 10-27 °C, wherein polymer B has a glass transition temperature T_{g}(B) of less than 8 °C, and wherein:
(c) Polymer A is obtainable by emulsion polymerization of a monomer mixture comprising (1) vinyl acetate in an amount of 50-70 parts by weight and (2) dibutyl maleate in an amount of 30-50 parts by weight; and polymer B is obtainable by emulsion polymerization of a monomer mixture comprising (1) vinyl acetate in an amount of 10-50 parts by weight and (2) dibutylmaleate in an amount of 50-90 parts by weight; or wherein
(d) Polymer A is obtainable by emulsion polymerization of a monomer mixture comprising (1) vinyl acetate in an amount of 50-70 parts by weight and (2) dibutyl maleate in an amount of 30-50 parts by weight; and polymer B is obtainable by emulsion polymerization of a monomer mixture comprising (1) vinyl acetate in an amount of 70-85 parts by weight and (2) ethylene in an amount of 15-30 parts by weight; or wherein
(e) Polymer A is obtainable by emulsion polymerization of a monomer mixture comprising (1) vinyl acetate in an amount of 85-95 parts by weight and (2) ethylene in an amount of 5-15 parts by weight; and polymer B is obtainable by emulsion polymerization of a monomer mixture comprising (1) vinyl acetate in an amount of 10-50 parts by weight and (2) dibutylmaleate in an amount of 50-90 parts by weight; or wherein
(f) Polymer A is obtainable by emulsion polymerization of a monomer mixture comprising (1) vinyl acetate in an amount of 85-95 parts by weight and (2) ethylene in an amount of 5-15 parts by weight; and polymer B is obtainable by emulsion polymerization of a monomer mixture comprising (1) vinyl acetate in an amount of 70-85 parts by weight and (2) ethylene in an amount of 15-30 parts by weight.

## Patentansprüche

1. Verfahren zur Beschichtung eines Käses, wobei eine wässrige Beschichtungszusammensetzung auf eine Oberfläche des Käses aufgebracht wird, wobei die Beschichtungszusammensetzung 90-40 Gew.-Teile eines Polymers A und 10-60 Gew.-Teile eines Polymers B umfasst, wobei Polymer A und Polymer B jeweils ausgewählt sind aus der Gruppe bestehend aus einem Polyvinylester und einem Poly(meth)acrylat, wobei Polymer A eine Glasübergangstemperatur T_{g}(A) von 10-27 °C aufweist und wobei Polymer B eine Glasübergangstemperatur T_{g}(B) von weniger als 8 °C aufweist.

2. Verfahren nach Anspruch 1, worin Polymer A und Polymer B Poly(vinylester) sind.

3. Verfahren nach Anspruch 1 oder 2, wobei Polymer A und Polymer B Copolymere sind, erhältlich durch Polymerisation von:
(a) 40 bis 97 Gew.-Teilen eines Monomers ausgewählt aus der Gruppe bestehend aus einem Vinylester von einer aliphatischen gesättigten Monocarbonsäure mit einer Kettenlänge von C₁-C₆, und
(b) 3 bis 60 Gew.-Teilen eines monoethylenisch ungesättigten Monomers ausgewählt aus der Gruppe bestehend aus einem Maleinmono- und/oder -diester von einem Alkanol mit einer Kettenlänge von C₁-C₁₈, einem Fumarsäuremono- und/oder -diester von einem Alkanol mit einer Kettenlänge von C₁-C₁₈, einem Acrylester von einem Alkanol mit einer Kettenlänge von C₁-C₁₈, einem Methacrylester von einem Alkanol mit einer Kettenlänge von C₁-C₁₈, einem alpha-Olefin mit einer Kettenlänge von C₂-C₁₈, Acrylsäure, Methacrylsäure und Itaconsäure.

4. Verfahren nach irgendeinem der vorhergehenden Ansprüche, wobei Polymer A erhältlich ist durch Polymerisation einer Monomermischung umfassend Vinylacetat und Dibutylmaleat oder durch Polymerisation einer Monomermischung umfassend Vinylacetat und Ethylen.

5. Verfahren nach irgendeinem der vorhergehenden Ansprüche, wobei Polymer B erhältlich ist durch Polymerisation einer Monomermischung umfassend Vinylacetat und Ethylen.

6. Verfahren nach irgendeinem der vorhergehenden Ansprüche, wobei die Beschichtungszusammensetzung ferner ein Polymer C in einer Menge von 1-10 Gew.-Teilen umfasst, wobei das Polymer C eine Glasübergangstemperatur T_{g}(C) von 27 °C oder höher aufweist.

7. Verfahren nach irgendeinem der Ansprüche 5-6, wobei Polymer C erhältlich ist durch Polymerisation eines Monomers oder einer Monomermischung, wobei das Monomer ausgewählt ist aus der Gruppe bestehend aus einem Vinylester von einer aliphatischen gesättigten Monocarbonsäure mit einer Kettenlänge von C₁-C₆, einem Acrylester von einem Alkanol mit einer Kettenlänge von C₁-C₆, einem Methacrylester von einem Alkanol mit einer Kettenlänge von C₁-C₆, einer monoethylenisch ungesättigten C₂-C₁₂-Monocarbonsäure oder einem Salz davon und einer monoethylenisch ungesättigten C₂-C₁₂-Dicarbonsäure oder einem Salz davon.

8. Verfahren nach irgendeinem der Ansprüche 5-7, wobei Polymer C ein Vinylacetat-Homopolymer ist.

9. Verfahren nach irgendeinem der vorhergehenden Ansprüche, wobei die Beschichtungszusammensetzung umfasst:
(i) 25-60 Gew.-%, bezogen auf das Gesamtgewicht der Zusammensetzung, Polymer A und Polymer B und, falls vorhanden, Polymer C;
(ii) 0-10 Gew.%, bezogen auf das Gesamtgewicht der Zusammensetzung, eines Additivs; und
(iii) Wasser.

10. Verfahren nach irgendeinem der vorhergehenden Ansprüche, ferner umfassend die Schritte
- Trocknen des beschichteten Käses und
- Schneiden oder in Scheiben Schneiden des getrockneten Käses.

11. Verwendung einer Käse-Beschichtungszusammensetzung umfassend ein Polymer B zur Verbesserung des Schneid- oder Scheibschnittverhaltens eines Käses, wobei Polymer B nach irgendeinem der Ansprüche 1-10 definiert ist.

12. Verwendung nach Anspruch 11, wobei die Verbesserung des Schneid- oder Scheibschnittverhaltens eines Käses die Reduzierung der Abriebbildung beim Schneiden oder in Scheiben Schneiden umfasst.

13. Verwendung nach irgendeinem der Ansprüche 11-12, wobei der Käse beim in Scheiben Schneiden oder Schneiden eine Temperatur an seiner Oberfläche zwischen 2 und 10 °C aufweist.

14. Käse, geschnittener Käse oder in Scheiben geschnittener Käse, erhältlich durch das Verfahren nach irgendeinem der Ansprüche 1-10.

15. Wässrige Zusammensetzung zur Beschichtung eines Käses, umfassend 90-40 Gew.-Teile eines Polymers A und 10-60 Gew.-Teile eines Polymers B, wobei Polymer A eine Glasübergangstemperatur T_{g}(A) von 10-27 °C aufweist, wobei Polymer B eine Glasübergangstemperatur T_{g}(B) von weniger als 8 °C aufweist, und wobei:
(c) Polymer A erhältlich ist durch Emulsionspolymerisation einer Monomermischung umfassend (1) Vinylacetat in einer Menge von 50-70 Gew.-Teilen und (2) Dibutylmaleat in einer Menge von 30-50 Gew.-Teilen und Polymer B erhältlich ist durch Emulsionspolymerisation einer Monomermischung umfassend (1) Vinylacetat in einer Menge von 10-50 Gew.-Teilen und (2) Dibutylmaleat in einer Menge von 50-90 Gew.-Teilen; oder wobei
(d) Polymer A erhältlich ist durch Emulsionspolymerisation einer Monomermischung umfassend (1) Vinylacetat in einer Menge von 50-70 Gew.-Teilen und (2) Dibutylmaleat in einer Menge von 30-50 Gew.-Teilen und Polymer B erhältlich ist durch Emulsionspolymerisation einer Monomermischung umfassend (1) Vinylacetat in einer Menge von 70-85 Gew.-Teilen und (2) Ethylen in einer Menge von 15-30 Gew.-Teilen; oder wobei
(e) Polymer A erhältlich ist durch Emulsionspolymerisation einer Monomermischung umfassend (1) Vinylacetat in einer Menge von 85-95 Gew.-Teilen und (2) Ethylen in einer Menge von 5-15 Gew.-Teilen und Polymer B erhältlich ist durch Emulsionspolymerisation einer Monomermischung umfassend (1) Vinylacetat in einer Menge von 10-50 Gew.-Teilen und (2) Dibutylmaleat in einer Menge von 50 -90 Gew.-Teilen; oder wobei
(f) Polymer A erhältlich ist durch Emulsionspolymerisation einer Monomermischung umfassend (1) Vinylacetat in einer Menge von 85-95 Gew.-Teilen und (2) Ethylen in einer Menge von 5-15 Gew.-Teilen und Polymer B erhältlich ist durch Emulsionspolymerisation einer Monomermischung umfassend (1) Vinylacetat in einer Menge von 70-85 Gew.-Teilen und (2) Ethylen in einer Menge von 15-30 Gew.-Teilen.

## Revendications

1. Procédé de revêtement de fromage, dans lequel une composition de revêtement aqueuse est appliquée sur la surface du fromage, ladite composition de revêtement comprenant de 90 à 40 parties en poids d'un polymère A et de 10 à 60 parties en poids d'un polymère B, dans lequel le polymère A et le polymère B sont chacun choisis dans le groupe constitué d'un ester polyvinylique et d'un poly(méth)acrylate, dans lequel le polymère A a une température de transition vitreuse T_{g}(A) de 10 à 27 °C et dans lequel le polymère B a une température de transition vitreuse T_{g}(B) inférieure à 8 °C.

2. Procédé selon la revendication 1, dans lequel le polymère A et le polymère B sont un (des) ester(s) polyvinylique(s).

3. Procédé selon la revendication 1 ou 2, dans lequel le polymère A et le polymère B sont des copolymères pouvant être obtenus par polymérisation de :
(a) 40 à 97 parties en poids d'un monomère choisi dans le groupe constitué d'un ester vinylique d'un acide monocarboxylique saturé aliphatique ayant une longueur de chaîne de C₁ à C₆, et
(b) 3 à 60 parties en poids d'un monomère monoéthyléniquement insaturé choisi dans le groupe constitué d'un mono- et/ou diester maléique d'un alcanol ayant une longueur de chaîne de C₁ à C₁₈, d'un mono- et/ou diester fumarique d'un alcanol ayant une longueur de chaîne de C₁ à C₁₈, d'un ester acrylique d'un alcanol ayant une longueur de chaîne de C₁ à C₁₈, d'un ester méthacrylique d'un alcanol ayant une longueur de chaîne de C₁ à C₁₈, d'une alpha-oléfine ayant une longueur de chaîne de C₂ à C₁₈, d'acide acrylique, d'acide méthacrylique et d'acide itaconique.

4. Procédé selon l'une quelconque des revendications précédentes, dans lequel le polymère A peut être obtenu par polymérisation d'un mélange de monomères comprenant de l'acétate de vinyle et du maléate de dibutyle, ou par polymérisation d'un mélange de monomères comprenant de l'acétate de vinyle et de l'éthylène.

5. Procédé selon l'une quelconque des revendications précédentes, dans lequel le polymère B peut être obtenu par polymérisation d'un mélange de monomères comprenant de l'acétate de vinyle et de l'éthylène.

6. Procédé selon l'une quelconque des revendications précédentes, dans lequel la composition de revêtement comprend en outre un polymère C en une quantité de 1 à 10 parties en poids, dans lequel le polymère C a une température de transition vitreuse T_{g}(C) supérieure ou égale à 27 °C.

7. Procédé selon l'une quelconque des revendications 5 à 6, dans lequel le polymère C peut être obtenu par polymérisation d'un monomère ou d'un mélange de monomères, dans lequel le monomère est choisi dans le groupe constitué d'un ester vinylique d'un acide monocarboxylique saturé aliphatique ayant une longueur de chaîne de C₁ à C₆, d'un ester acrylique d'un alcanol ayant une longueur de chaîne de C₁ à C₆, d'un ester méthacrylique d'un alcanol ayant une longueur de chaîne de C₁ à C₆, d'un acide monocarboxylique monoéthyléniquement insaturé en C₂ à C₁₂ ou d'un sel de celui-ci, et d'un acide dicarboxylique monoéthyléniquement insaturé en C₂ à C₁₂ ou d'un sel de celui-ci.

8. Procédé selon l'une quelconque des revendications 5 à 7, dans lequel le polymère C est un homopolymère d'acétate de vinyle.

9. Procédé selon l'une quelconque des revendications précédentes, dans lequel la composition de revêtement comprend :
(i) de 25 à 60 % en poids, par rapport au poids total de la composition, de polymère A et de polymère B et, le cas échéant, de polymère C ;
(ii) de 0 à 10 % en poids, par rapport au poids total de la composition, d'un additif ; et
(iii) de l'eau.

10. Procédé selon l'une quelconque des revendications précédentes comprenant en outre les étapes consistant à
- sécher le fromage revêtu, et
- couper ou découper le fromage séché.

11. Utilisation d'une composition de revêtement de fromage comprenant un polymère B pour améliorer les propriétés de découpe ou de coupe d'un fromage, dans laquelle le polymère B est défini selon l'une quelconque des revendications 1 à 10.

12. Utilisation selon la revendication 11, dans laquelle l'amélioration des propriétés de découpe ou de coupe d'un fromage comprend la réduction des granulosités lors de la découpe ou de la coupe de celui-ci.

13. Utilisation selon l'une quelconque des revendications 11 à 12, dans laquelle le fromage, lorsqu'il est découpé ou coupé, a une température, en surface, comprise entre 2 et 10 °C.

14. Fromage, fromage coupé ou fromage découpé pouvant être obtenu par le procédé selon l'une quelconque des revendications 1 à 10.

15. Composition aqueuse destinée à revêtir un fromage comprenant de 90 à 40 parties en poids d'un polymère A et de 10 à 60 parties en poids d'un polymère B, dans laquelle le polymère A a une température de transition vitreuse T_{g}(A) de 10 à 27 °C, dans laquelle le polymère B a une température de transition vitreuse T_{g}(B) inférieure à 8 °C, et dans laquelle :
(c) le polymère A peut être obtenu par polymérisation en émulsion d'un mélange de monomères comprenant (1) de l'acétate de vinyle en une quantité de 50 à 70 parties en poids et (2) du maléate de dibutyle en une quantité de 30 à 50 parties en poids ; et le polymère B peut être obtenu par polymérisation en émulsion d'un mélange de monomères comprenant (1) de l'acétate de vinyle en une quantité de 10 à 50 parties en poids et (2) du maléate de dibutyle en une quantité de 50 à 90 parties en poids ; ou dans laquelle
(d) le polymère A peut être obtenu par polymérisation en émulsion d'un mélange de monomères comprenant (1) de l'acétate de vinyle en une quantité de 50 à 70 parties en poids et (2) du maléate de dibutyle en une quantité de 30 à 50 parties en poids ; et le polymère B peut être obtenu par polymérisation en émulsion d'un mélange de monomères comprenant (1) de l'acétate de vinyle en une quantité de 70 à 85 parties en poids et (2) de l'éthylène en une quantité de 15 à 30 parties en poids ; ou dans laquelle
(e) le polymère A peut être obtenu par polymérisation en émulsion d'un mélange de monomères comprenant (1) de l'acétate de vinyle en une quantité de 85 à 95 parties en poids et (2) de l'éthylène en une quantité de 5 à 15 parties en poids; et le polymère B peut être obtenu par polymérisation en émulsion d'un mélange de monomères comprenant (1) de l'acétate de vinyle en une quantité de 10 à 50 parties en poids et (2) du maléate de dibutyle en une quantité de 50 à 90 parties en poids ; ou dans laquelle
(f) le polymère A peut être obtenu par polymérisation en émulsion d'un mélange de monomères comprenant (1) de l'acétate de vinyle en une quantité de 85 à 95 parties en poids et (2) de l'éthylène en une quantité de 5 à 15 parties en poids ; et le polymère B peut être obtenu par polymérisation en émulsion d'un mélange de monomères comprenant (1) de l'acétate de vinyle en une quantité de 70 à 85 parties en poids et (2) de l'éthylène en une quantité de 15 à 30 parties en poids.
